# EUROPÄISCHE PATENTSCHRIFT

(11) **EP 1 142 766 B1**
(45) Veröffentlichungstag und Bekanntmachung des Hinweises auf die Patenterteilung: **11.10.2006**
(21) Anmeldenummer: 01107000.0
(22) Anmeldetag: 21.03.2001
(51) Int. Cl.: B60T 7/04, B60T 11/16, B60T 8/40

(54) **Betätigungseinrichtung für eine Kraftfahrzeug-Bremsanlage vom Typ "brake by wire"**
Actuation device for a vehicle brake system of the brake-by-wire type
Dispositif d'actuation pour système de freinage pour véhicule du type brake-by-wire

(30) Priorität: 05.04.2000 DE 10016879
(43) Veröffentlichungstag der Anmeldung: 10.10.2001
(73) Patentinhaber: Bayerische Motoren Werke Aktiengesellschaft, 80809 München (DE)
(72) Erfinder: Pauly, Axel, 85757 Karlsfeld (DE); Schille, Karsten, 30161 Hannover (DE)

(56) Entgegenhaltungen:
- DE-A- 19 640 767
- DE-C- 19 638 102
- DE-C- 19 950 862

## Beschreibung

Die Erfindung betrifft eine Betätigungseinrichtung für eine Kraftfahrzeug-Bremsanlage vom Typ "brake by wire", bestehend aus einem Bremspedal sowie aus einem mit diesem zusammenwirkenden hydraulischen Simulator, dessen Simulatorkolben bei einer Druckbetätigung des Bremspedales hydraulisch über einen variablen Strömungswiderstand gegen die Kraft eines Federelementes vorschoben wird. Zum bekannten Stand der Technik wird auf die DE 196 40 767 A1 oder DE 196 38102 C1 sowie auf die DE 198 32 036 A1 verwiesen.

Bekanntermaßen erfolgt bei einer sog. "brake by wire"-Bremsanlage die Aufbringung der Bremskraft nicht mehr direkt mechanisch bzw. insbesondere hydraulisch unter Zwischenschaltung eines Bremskraftverstärkers, sondern es wird die auf das Bremspedal einwirkende Betätigungskraft sowie der in Folge hiervon vom Bremspedal zurückgelegte Weg als Eingangsinformation für eine elektronische Steuereinheit verwendet, in welcher dann die jeweils geforderte bzw. entsprechend der Anforderung bestgeeignete Bremskraft erzeugt, d.h. bspw. auf die Radbremsscheiben des Kraftfahrzeuges aufgebracht wird. Letzeres kann im übrigen wieder rein mechanisch oder unter Zwischenschaltung eines Hydrauliksystemes erfolgen.

Bei einer derartigen "brake by wire"-Bremsanlage muß dem Kraftfahrzeug-Führer, der das Bremspedal betätigt, eine gewisse Reaktion auf diese Betätigung hin übermittelt werden, d.h. einer Betätigung des Bremspedales muß eine wünschenswerterweise veränderbare Kraft entgegengesetzt werden. Damit kann für den Kraftfahrzeug-Führer das Verhalten einer herkömmlichen rein mechanischen oder hydraulischen Bremsanlage simuliert werden und praktisch nur damit kann dem Kraftfahrzeug-Führer auch die Möglichkeit gegeben werden, das Bremspedal wie gewünscht mit unterschiedlicher Intensität betätigen zu können.

In der eingangs erstgenannten DE 196 40 767 A1 wird diese bei einer Betätigung des Bremspedales auf dieses einwirkende und dabei veränderbare Gegen-Kraft dadurch erzeugt, daß ein sog. Simulatorkolben bei einer Druckbetätigung des Bremspedales hydraulisch über einen variablen Strömungswiderstand gegen die Kraft eines Federelementes vorschoben wird. Dieser Strömungswiderstand ist dabei alleine wegabhängig und nur in gewissen Stufenschritten veränderbar. Hiermit kann das bisherige Reaktionsverhalten einer rein mechanischen oder hydraulischen Bremsanlage, d.h. einer solchen ohne "brake-by-wire"-Elemente nur in unzureichendem Maße nachgebildetwerden. Das Dokument DE 19638102 C1 beschreibt eine gattungsgemäße Anordnung gemäss dem Oberbegriff des Anspruchs 1.

In der eingangs zweitgenannten DE 198 32 036 A1 ist eine Bremssteuerungseinrichtung mit einem sog. aktiven Hubsimulator beschrieben, bei welchem neben der Niederdrück-Geschwindigkeit des Bremspedales auch die Niederdrück-Kraft gemessen und beim Aufbau dieses Simulators berücksichtigt wird. Aktiv ist dieser Simulator einer elektrohydraulischen "brake-by-wire"-Bremsanlage insofern, als die auf das Bremspedal ebenfalls auf hydraulischem Wege aufgebrachte Gegen-Kraft quasi von der hydraulischen Bremsanlage abgezweigt wird, d.h. ein Teil des in erster Linie für die Umsetzung des Bremsvorganges komprimierten Hydraulikmediums wird dazu verwendet, dem Bremspedal bzw. einem mit diesem mechanisch verbundenen sog. Simulatorkolben einen variablen Widerstand entgegenzusetzen. Unter Wirkungsgrad-Gesichtspunkten ist ein derartiger aktiver Simulator daher weniger günstig.

Gegenüber diesem bekannten Stand der Technik eine verbesserte Betätigungseinrichtung für eine Kraftfahrzeug-Bremsanlage nach dem Oberbegriff des Patentanspruchs 1 aufzuzeigen, ist Aufgabe der vorliegenden Erfindung.

Die Lösung dieser Aufgabe ist dadurch gekennzeichnet, daß ein bzw. der aus der eingangs erstgenannten Schrift bekannte variable Strömungswiderstand stufenlos variabel zwischen zwei Extremwerten einstellbar ist und durch eine elektronische Steuereinheit unter Berücksichtigung der auf das Bremspedal einwirkenden Betätigungskraft sowie des durch diese Betätigung zurückgelegten Bremspedalweges wie gewünscht eingestellt wird. Vorteilhafte Weiterbildungen sind Inhalt der Unteransprüche.

Erfindungsgemäß wird beim Betätigen des Bremspedales ausgelöst hierdurch eine Hydraulikflüssigkeit durch ein regelbares Ventil mit variabel einstellbarem Durchströmquerschnitt oder dgl. gefördert, d.h. allgemein ausgedrückt durch einen stufenlos variablen Strömungswiderstand. Bei der Einstellung des Durchströmquerschnittes bzw. Strömungswiderstandes wird dabei neben dem in einer gewissen Zeitspanne zurückgelegten Bremspedalweg - dies entspricht der Betätigungsgeschwindigkeit - auch die auf das Bremspedal aufgebrachte Betätigungskraft berücksichtigt. Unter Berücksichtigung dieser genannten Größen läßt sich zusammen mit dem stufenlos variablen Strömungswiderstand das bekannte Verhalten bislang üblicher mechanischer oder hydraulischer Bremsanlagen ohne brake-by-wire-Elemente unter Zuhilfenahme einer elektronischen Steuereinheit praktisch identisch nachbilden.

Dabei benötigt eine erfindungsgemäße Betätigungseinrichtung nahezu keine Fremdenergie, nachdem analog dem bekannten Stand der Technik nach der bereits genannten DE 196 40 767 A1 das Hydraulikmedium durch die Bremspedalbetätigung selbst durch den Strömungswiderstand hindurch gefördert wird, ohne daß - wie die bereits genannte DE 198 32 036 A1 zeigt - eine Hydraulikpumpe zum Bereitstellen von Hydraulikdruck erforderlich ist. Wie im vorhergehenden Absatz erläutert wurde, spiegelt eine erfindungsgemäße Betätigungseinrichtung jedoch das jeweilige Bremsverhalten dem Kraftfahrzeug-Führer deutlich besser wieder als die in der erstgenannten Schrift gezeigte Betätigungseinrichtung. Der einzige nennenswerte Energiebedarf einer erfindungsgemäßen Betätigungseinrichtung entsteht im übrigen beim Einstellen des gewünschten Strömungswiderstandes, so bspw. wenn dieser als ein Elektro-Ventil bzw. ein elektromagnetisch oder elektromotorisch verstellbares Ventil mit stufenlos variablem Durchströmquerschnitt ausgebildet ist.

Besonders originalgetreu wird das Bremsverhalten dabei am Bremspedal widergespiegelt, wenn der variable Strömungswiderstand derart eingestellt wird, dass bei einer Betätigung des Bremspedals mit Einsetzen der Bremswirkung eine Änderung des bis dahin spürbaren Kraftverlaufs erfolgt. Auch bei bisherigen, über das Bremspedal direkt hydraulisch betätigten Bremsanlagen ist bei einer Pedalbetätigung zunächst ein gewisser Leerweg zurückzulegen, ehe die Bremsbeläge unter Druck an der Bremsscheibe oder dgl. zum Anliegen kommen und die Bremswirkung dann tatsächlich einsetzt. Da dies bei "brake-by-wire-Bremsanlagen" ebenso auftritt, soll bei einer Betätigung des Bremspedals ausgehend von seiner Ruhestellung nun bevorzugt zunächst lediglich ein relativ geringer Anstieg der Pedal-Reaktionskraft über dem Pedalweg erfolgen, solange bis die Bremswirkung tatsächlich einsetzt, d.h. solange bis die Bremsbeläge unter Druck an der Bremsscheibe oder dgl. anliegen. Danach soll eine weitere Pedalbetätigung bevorzugt einen wesentlich steileren Anstieg der Pedal-Reaktionskraft über dem Pedalweg zur Folge haben. Konkret kann es sich dabei um lineare oder parabelförmige Verläufe der Pedal-Reaktionskraft über dem Pedalweg handeln.

Mit der im vorangegangenen Absatz vorgeschlagenen Auslegungsphilosophie soll im wesentlichen ein sog. Pedal-Leerweg, der aus unvermeidbaren bzw. sogar erforderlichen Leerwegen im Bremssystem resultiert, für den Fahrzeug-Führer am Bremspedal spürbar gemacht werden. Demzufolge muss einer elektronischen Steuereinheit oder dgl., welche die entsprechende Einstellung des variablen Strömungswiderstands veranlasst, mitgeteilt werden, wann ausgehend von einer Bremspedalbetätigung aus der Ruhelage die Bremswirkung tatsächlich einsetzt. Bei einer hydraulischen "brake-by-wire-Bremsanlage" kann dieser Punkt durch geeignete Drucküberwachung im Hydrauliksystem ermittelt werden, während bei einer elektromechanischen Bremsenbetätigung eine geeignete Wegmessung oder Kraftmessung erfolgen kann.

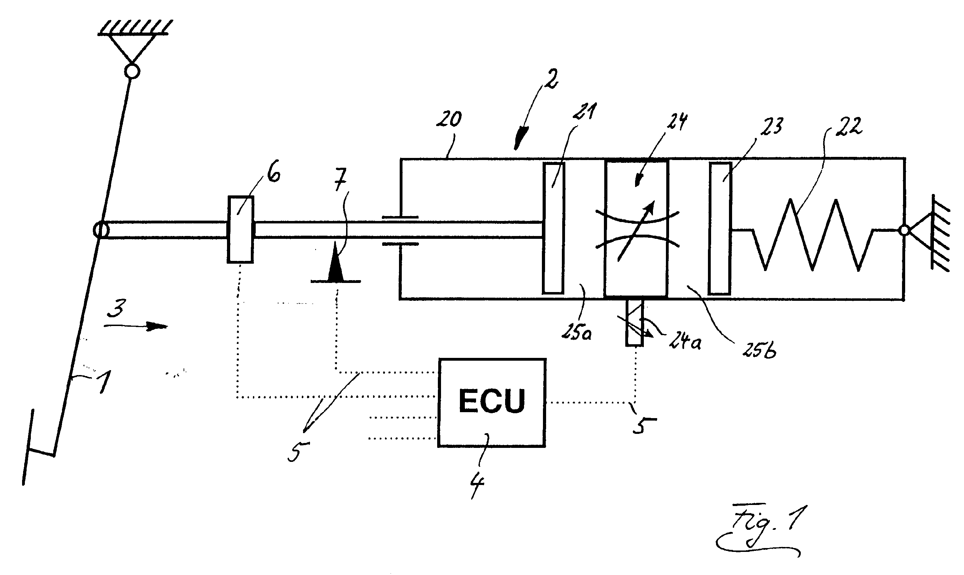

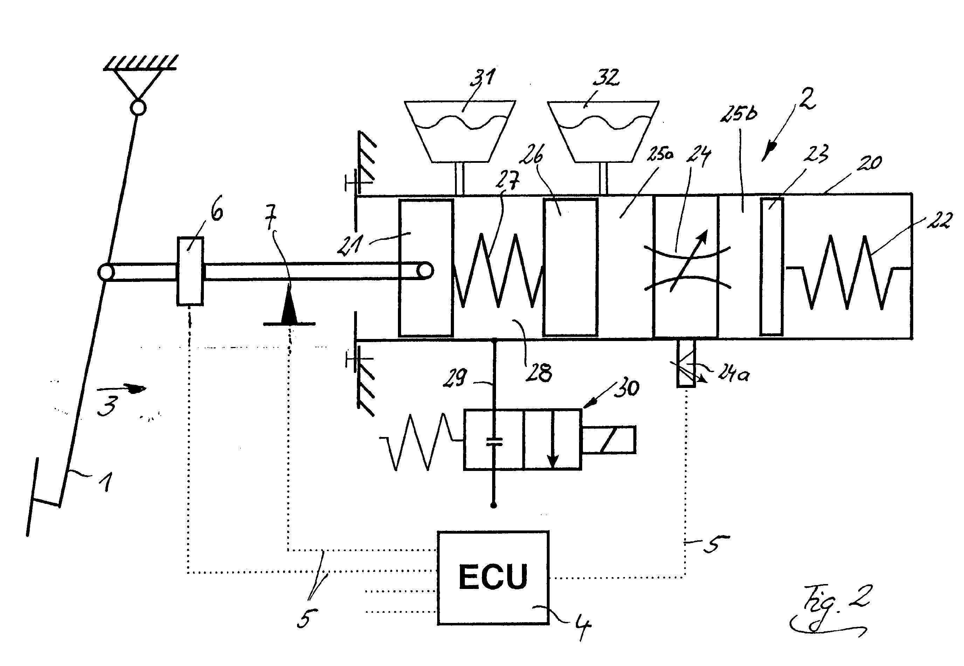

Im folgenden wird die Erfindung anhand zweier lediglich schematisch dargestellter bevorzugter Ausführungsbeispiele weiter erläutert. In den beiden beigefügten **Figuren 1, 2** sind dabei gleiche Bauelemente mit den gleichen Bezugsziffern bezeichnet.
Neben einem Bremspedal 1 ist im wesentlichen nur noch ein in seiner Gesamtheit mit der Bezugsziffer 2 bezeichneter hydraulischer Simulator dargestellt, mit Hilfe dessen bei einer Betätigung des Bremspedales 1 gemäß Pfeilrichtung 3 eine geeignete dieser Betätigung entgegengerichtete Reaktions-Kraft oder Gegen-Kraft erzeugt wird. Selbstverständlich liegt der eigentliche Zweck einer Betätigung dieses Bremspedales 1 jedoch darin, eine nicht dargestellte Bremsanlage eines Kraftfahrzeuges zu betätigen.

Bei dieser nicht dargestellten Bremsanlage eines Kraftfahrzeuges handelt es sich um eine sog. "brake-by-wire"-Bremsanlage, bei welcher in Folge der Betätigung des Bremspedales 1 entsprechende elektronische Signale an eine elektronische Steuereinheit 4 (hier mit ECU = "electronic control unit" bezeichnet) geleitet werden, welche ihrerseits dann einem entsprechenden Rechenprogramm folgend die gewünschte Bremsaktion einleitet, d.h. die Bremsanlage betätigt. Bei dieser kann es sich grundsätzlich um eine elektromechanische oder um eine elektrohydraulische Bremsanlage handeln.

Wie mittels elektronischer Übertragungsleitungen 5 dargestellt ist, erhält die Steuereinheit 4 die aus einer Betätigung des Bremspedales 1 resultierenden elektronischen Signale von einem Kraftaufnehmer 6 sowie einem Wegaufnehmer 7. Werden die Signale des Wegaufnehmers 7 über der Zeit differenziert, so erhält man im übrigen die Betätigungs-Geschwindigkeit, d.h. die Geschwindigkeit, mit welcher das Bremspedal 1 niedergedrückt wird, während der Kraftaufnehmer 6 direkt wiedergibt, mit welcher Kraft, d.h. wie intensiv das Bremspedal 1 gemäß Pfeilrichtung 3 niedergedrückt wird.

Die elektronische Steuereinheit 4 veranlaßt jedoch nicht nur eine Betätigung der Bremsanlage, sondern stellt anhand der am Bremspedal 1 mittels des Kraftaufnehmers 6 sowie des Wegaufnehmers 7 ermittelten Betätigungssignale auch den hydraulischen Simulator 2 solchermaßen ein, daß der jeweiligen Betätigungscharakteristik des Bremspedales 1 seitens des Simulators 2 auch die dementsprechende Reaktions- oder Gegen-Kraft entgegengesetzt wird. Wesentliche Bestandteile dieses hydraulischen Simulators 2 sind ein Hydraulikzylinder 20, ein darin verschiebbar geführter Stellkolben 21, ein sich über ein Federelement 22 abstützender Simulatorkolben 23, sowie ein zwischen den beiden Kolben 21, 23 vorgesehener variabler Strömungswiderstand 24.

Im folgenden wird zunächst auf das Ausführungsbeispiel nach **Figur 1** Bezug genommen: Hier ist wie ersichtlich der Stellkolben 21 starr mit dem Bremspedal 1 verbunden, so daß bei einer Betätigung desselben gemäß Pfeilrichtung 3 der Stellkolben 21 ebenso in Pfeilrichtung 3 im Hydraulikzylinder 20 verschoben wird. Innerhalb dieses Hydraulikzylinders 20 ist dabei der Raum zwischen den beiden Kolben 21 und 22 mit Hydraulikmedium befüllt, d.h. es befindet sich sowohl linksseitig des variablen Strömungswiderstandes 24 in der sog. Teilkammer 25a, als auch rechtsseitig desselben in der sog. Teilkammer 25b Hydraulikmedium.

Bei einer Betätigung des Bremspedales 1 und einer daraus resultierenden Verschiebebewegung des Stellkolbens 21 gemäß Pfeilrichtung 3 wird somit Hydraulikmedium aus der Teilkammer 25a durch den Strömungswiderstand 24 hindurch in die Teilkammer 25b gefördert. Als Folge hiervon wird auch der Simulatorkolben 23 gegen die Kraft des Federelementes 22 gemäß Pfeilrichtung 3 verschoben. Somit resultiert aus einer Betätigung des Bremspedales 1 eine auf den Stellkolben 21 einwirkende Reaktionskraft bzw. Gegenkraft, die dieser Betätigung entgegenwirkt, und die sich aus zwei Anteilen zusammensetzt, nämlich dem Anteil zur Überwindung des Strömungswiderstandes 24 sowie dem Anteil zum Komprimieren des Federelementes 22.

Wie bereits erwähnt ist der Strömungswiderstand 24 stufenlos variabel zwischen zwei Extremwerten einstellbar. Durch Variation des Wertes dieses Strömungswiderstandes 24 ist somit die durch eine Betätigung des Bremspedales 1 hervorgerufene Reaktions- oder Gegenkraft einstellbar. Somit sind also an diesem hydraulischen Simulator 2 unterschiedliche, und wegen der stufenlosen Variabilität des Strömunsgwiderstandes 24 praktisch beliebige Reaktionskräfte erzeugbar.

Bevorzugt ist der variable Strömungswiderstand 24 als Elektro-Ventil mit variablem Durchströmquerschnitt ausgebildet, wobei dieser Durchströmquerschnitt mittels eines elektrischen Stellmotors 24a gesteuert durch die elektronische Steuereinheit 4 einstellbar ist. Dies erlaubt es vorteilhafterweise auch, für eine Rückstellbewegung des Bremspedales 1 gegen Pfeilrichtung 3 diesen Strömungswiderstand 24 zu minimieren, so daß diese Rückstellbewegung bestmöglich alleine durch das Federelement 22 hervorgerufen wird. Wird somit auf das Bremspedal 1 keine weitere Betätigungskraft gemäß Pfeilrichtung 3 ausgeübt, so wird der variable Strömungswiderstand 24 minimiert, wonach sich das Federelement 22 zu entspannen trachtet und somit den Simulatorkolben 23 gegen Pfeilrichtung 3 verschiebt. Hierdurch gelangt Hydraulikmedium aus der Teilkammer 25b in die Teilkammer 25a und verdrängt bzw. verschiebt somit den Stellkolben 21 zusammen mit dem Bremspedal 1 gegen Pfeilrichtung 3 zurück in die Ausgangsposition.

Im übrigen ergibt sich hieraus, daß die minimal einstellbare Reaktionskraft auf eine Betätigung des Bremspedales 1 hin bei einem Wert des Strömungswiderstandes 24 in der Größenordnung von "Null" durch die Kraft-Kennung des Federelementes 22 bestimmt ist, für welches im übrigen auch ein anderes Kraft- oder Energiespeicherelement zum Einsatz kommen kann.

Beim Ausführungsbeispiel nach **Figur 2** ist zwischen dem mechanisch an das Bremspedal 1 gekoppelten Stellkolben 21 und dem variablen Strömungswiderstand 24 ein Zwischenkolben 26 vorgesehen, der üblicherweise bei einer Betätigung des Bremspedales 1 das Hydraulikmedium durch den Strömungswiderstand 24 in Richtung zum Simulatorkolben 23 verdrängt, wobei zwischen dem Stellkolben 21 und dem sich an diesem auch über ein Federelement 27 abstützenden Zwischenkolben 26 ein ebenfalls mit Hydraulikmedium befüllbarer oder auch von diesem entleerbarer Hydraulikraum 28 vorgesehen ist.

Wie bereits erwähnt ist üblicherweise eine Verschiebebewegung des Stellkolbens 21 im wesentlichen starr an eine solche des hier gegenüber dem Ausführungsbeispiel nach Fig.1 zusätzlich vorgesehenen Zwischenkolbens 26 gekoppelt, was daraus resultiert, daß der Hydraulikraum 28 üblicherweise vollständig mit praktisch nicht mehr weiter komprimierbarem Hydraulikmedium befüllt ist. In diesem Zustand ist die Funktionsweise des hydraulischen Simulators 2 nach Fig.2 identisch derjenigen des Ausführungsbeispieles nach Fig.1.

Nun kann aber bei einer Kfz-Bremsanlage vom Typ "brake-by-wire" eine sog. Rückfallebene erwünscht sein, mit Hilfe derer sichergestellt werden kann, daß auch bei einem Ausfall des elektrischen Systemes noch eine Betätigung, zumindest Notbetätigung der Bremsanlage möglich ist. Bei einer elektrohydraulischen "brake-by-wire"-Bremsanlage kann diese Notfall-Bremsanlagen-Betätigung dann bevorzugt auf hydraulischem Wege erfolgen. Der entsprechende Betätigungsimpuls muß dann direkt vom Bremspedal 1 aufgebracht bzw. eingeleitet werden. Dies ist direkt aus dem hydraulischem Simulator 2 heraus möglich, wie das Ausführungsbeispiel nach Fig.2 zeigt.

Bei einem Ausfall des elektrischen oder elektronischen Systemes kann automatisch sichergestellt werden, daß der variable Strömungswiderstand maximiert bzw. sogar geschlossen wird, so daß dann kein Hydraulikmedium von der Teilkammer 25a in die Teilkammer 25b gelangen kann. Dann liegt der Zwischenkolben praktisch unverrückbar im Hydraulikzylinder 20 fest bzw. kann zumindest nicht in Pfeilrichtung 3 verschoben werden.

Wie ersichtlich zweigt vom zwischen dem Zwischenkolben 26 und dem Stellkolben 21 eingeschlossenen Hydraulikraum 28 eine Abfuhrleitung 29 ab, in der ein als Elektromagnetventil ausgebildetes Sperrventil 30 vorgesehen ist. Üblicherweise, d.h. wenn die "brake-by-wire"-Bremsanlage voll funktionsfähig ist, ist dieses Sperrventil 30 geschlossen (wie figürlich dargestellt). Bei einem Ausfall des elektrischen oder elektronischen Systemes wird dieses Sperrventil 30 jedoch geöffnet. Dann kann bei einer Betätigung des Bremspedales 1 das hierbei im Hydraulikraum 28 komprimierte Hydraulikmedium über die Abfuhrleitung 29 aus dem Hydraulikzylinder abgeführt und unter Druck solchermaßen in die hydraulische Bremsanlage eingeleitet werden, daß hierdurch die Bremsen greifen und somit das Kraftfahrzeug immer noch zum Stillstand gebracht werden kann.

Nach Beendigung dieses Bremsmanövers erfolgt die Rückstellung des Stellkolbens 21 sowie des Bremspedales 1 durch das sich am dann praktisch unverschiebbaren Zwischenkolben 26 abstützende Federelement 27. In Figur 2 sind im übrigen noch zwei Tankvolumina 31, 32 vorgesehen, aus denen die Hydraulikkammer 28 bzw. die Teilkammer 25a mit Hydraulikmedium befüllbar ist. Ferner sei darauf hingewiesen, daß selbstverständlich eine Vielzahl von Details insbesondere konstruktiver Art durchaus abweichend vom gezeigten Ausführungsbeispiel gestaltet sein können, ohne den Inhalt der Patentansprüche zu verlassen. Stets erhält man eine Betätigungseinrichtung für eine Kfz-Bremsanlage vom Typ "brake-by-wire", bei der am Bremspedal 1 ein regelbarer Kraft-Weg-Geschwindigkeitsverlauf realisierbar ist, wobei keine separate Energiezufuhr zur Darstellung dieses geregelten Kraft-Wegverlaufs notwendig ist. Dabei zeichnet sich eine erfindungsgemäße Betätigungseinrichtung vorteilhafterweise durch geringes Gewicht, wenig Bauraumbedarf und niedrige Herstellkosten aus.

### Bezugszeichenliste:

- 1: Bremspedal
- 2: hydraulischer Simulator
- 3: Pfeilrichtung: Betätigung von 1
- 4: elektronische Steuereinheit (ECU)
- 5: elektronische Übertragungsleitung
- 6: Kraftaufnehmer
- 7: Wegaufnehmer
- 20: Hydraulikzylinder
- 21: Stellkolben
- 22: Federelement (allg.: Kraftspeicherelement)
- 23: Simulatorkolben
- 24: variabler Strömungswiderstand (insbesondere Elektro-Ventil)
- 24a: Stellmotor (zur Einstellung von 24)
- 25a,b: Teilkammer
- 26: Zwischenkolben
- 27: Federelement (alig.: Kraftspeicherelement)
- 28: Hydraulikraum
- 29: Abfuhrleitung
- 30: Sperrventil
- 31,32: Tankvolumen

## Patentansprüche

1. Betätigungseinrichtung für eine Kraftfahrzeug-Bremsanlage vom Typ "brake by wire", bestehend aus einem Bremspedal (1) sowie aus einem mit diesem zusammenwirkenden hydraulischen Simulator (2), dessen Simulatorkolben (23) bei einer Druckbetätigung des Bremspedales (1) hydraulisch über einen variablen Strömungswiderstand (24) gegen die Kraft eines Federelementes (22) vorschoben wird,
**dadurch gekennzeichnet, daß** der variable Strömungswiderstand (24) stufenlos variabel zwischen zwei Extremwerten einstellbar ist und durch eine elektronische Steuereinheit (4) unter Berücksichtigung der auf das Bremspedal (1) einwirkenden Betätigungskraft sowie des durch diese Betätigung zurückgelegten Bremspedalweges wie gewünscht eingestellt wird.

2. Betätigungseinrichtung nach Anspruch 1,
**dadurch gekennzeichnet, daß** der variable Strömungswiderstand (24) als Elektro-Ventil mit variablem Durchströmquerschnitt ausgebildet ist.

3. Betätigungseinrichtung nach Anspruch 1 oder 2,
**dadurch gekennzeichnet, daß** zwischen einem mechanisch an das Bremspedal (1) gekoppelten Stellkolben (21) und dem variablen Strömungswiderstand (24) ein Zwischenkolben (26) vorgesehen ist, der üblicherweise bei einer Betätigung des Bremspedales (1) das Hydraulikmedium durch den Strömungswiderstand (24) in Richtung zum Simulatorkolben (23) verdrängt, wobei zwischen dem Stellkolben (21) und dem sich an diesem auch über ein Federelement (27) abstützenden Zwischenkolben (26) ein mit Hydraulikmedium befüllbarer oder auch von diesem entleerbarer Hydraulikraum (28) vorgesehen ist.

4. Betätigungsvorrichtung nach einem der vorangegangenen Ansprüche, **dadurch gekennzeichnet, dass** der variable Strömungswiderstand (24) derart eingestellt wird, **dass** bei einer Betätigung des Bremspedals (1) mit Einsetzen der Bremswirkung eine Änderung des bis dahin spürbaren Kraftverlaufs erfolgt.

## Claims

1. An actuating device for a motor vehicle brake system of the "brake by wire" construction, comprising a brake pedal (1) and a hydraulic simulator (2) cooperating with the latter, the simulator piston (23) of which is displaced hydraulically via a variable flow resistor (24) against the force of a spring element (22) upon a pressure actuation of the brake pedal (1), **characterised in that** the variable flow resistor (24) can be continuously variably adjusted between two extreme values and is adjusted as desired by an electronic control unit (4), taking into account the actuating force acting on the brake pedal (1) and the brake pedal path covered by this actuation.

2. An actuating device according to claim 1, **characterised in that** the variable flow resistor (24) is configured as an electric valve with a variable flow cross-section.

3. An actuating device according to claim 1 or claim 2, **characterised in that** an intermediate piston (26) is provided between a set piston (21) mechanically coupled to the brake pedal (1), and the variable flow resistor (24), and generally displaces the hydraulic medium through the flow resistor (24) in the direction of the simulator piston (23) in the event of an actuation of the brake pedal (1), a hydraulic chamber (28) which can be filled with hydraulic medium or can be emptied thereof being provided between the set piston (21) and the intermediate piston (26) which is also supported on the latter via a spring element (27).

4. An actuating device according to any one of the preceding claims, **characterised in that** the variable flow resistor (24) is adjusted in such a way that in the event of an actuation of the brake pedal (1), with the start of the braking action, a change in the course of the force which can be perceived until then takes place.

## Revendications

1. Dispositif d'actionnement pour un dispositif de freinage d'un véhicule automobile du type « brake by wire » (frein câblé), comprenant une pédale de frein (1) ainsi qu'un simulateur hydraulique (2) coopérant avec celle-ci, le piston (23) du simulateur avançant hydrauliquement contre la force l'un élément de ressort (22) par une résistance d'écoulement variable (24) lors d'une pression d'actionnement exercée sur la pédale de frein (1),
**caractérisé en ce que**
la résistance d'écoulement variable (24) est réglable de manière variable et non étagée entre deux valeurs extrêmes et elle est réglée comme on le souhaite par une unité de commande électronique (4) en tenant compte de la force d'actionnement agissant sur la pédale de frein (1) ainsi que de la course de la pédale de frein accomplie suite à cet actionnement.

2. Dispositif d'actionnement selon la revendication 1,
**caractérisé en ce que**
la résistance d'écoulement variable (24) est réalisée sous la forme d'une électrovanne présentant une section de passage variable.

3. Dispositif d'actionnement selon la revendication 1 ou 2,
**caractérisé en ce qu'**
entre un piston de positionnement (21) couplé mécaniquement à la pédale de frein (1) et la résistance d'écoulement variable (24), on prévoit un piston intermédiaire (26) qui refoule de manière classique le milieu hydraulique par la résistance d'écoulement (24) en direction du piston de simulateur (23) lorsque la pédale de frein (1) est actionnée, et entre le piston de positionnement (21) et le piston intermédiaire (26) s'appuyant sur celui-ci également par un élément de ressort (27), on prévoit une chambre hydraulique (28) qui peut être remplie d'un milieu hydraulique ou être vidée de celui-ci.

4. Dispositif d'actionnement selon l'une des revendications précédentes,
**caractérisé en ce que**
la résistance d'écoulement variable (24) est réglée de manière à modifier le gradient de la force ressentie jusqu'ici en introduisant l'action de freinage lorsque la pédale de frein (1) est actionnée.
